(19) Europäisches Patentamt
European Patent Office
Office européen des brevets

(11) EP 4 400 530 B1

(12) **EUROPEAN PATENT SPECIFICATION**

(45) Date of publication and mention of the grant of the patent:
**29.10.2025 Bulletin 2025/44**

(21) Application number: **22869137.4**

(22) Date of filing: **09.09.2022**

(51) International Patent Classification (IPC):
***C08G 63/78*** *(2006.01)* ***C08G 63/00*** *(2006.01)*
***C08G 63/02*** *(2006.01)* ***C08L 67/00*** *(2006.01)*
***C08L 67/02*** *(2006.01)*

(52) Cooperative Patent Classification (CPC):
**C08G 63/672; C08G 63/78**

(86) International application number:
**PCT/CN2022/118113**

(87) International publication number:
**WO 2023/040768 (23.03.2023 Gazette 2023/12)**

(54) **POLYESTER, AND PREPARATION METHOD THEREFOR AND APPLICATION THEREOF**

POLYESTER UND HERSTELLUNGSVERFAHREN DAFÜR UND ANWENDUNG DAVON

POLYESTER, PROCÉDÉ DE PRÉPARATION ASSOCIÉ ET APPLICATION CORRESPONDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2021 CN 202111075507**

(43) Date of publication of application:
**17.07.2024 Bulletin 2024/29**

(73) Proprietors:
- **Zhuhai Wango Chemical Co., Ltd.**
  **Zhuhai, Guangdong 519000 (CN)**
- **KINGFA SCI. & TECH. CO., LTD.**
  **Guangzhou, Guangdong 510663 (CN)**

(72) Inventors:
- **ZHANG, Chuanhui**
  **Guangdong 519000 (CN)**
- **CHEN, Pingxu**
  **Guangdong 519000 (CN)**
- **YE, Nanbiao**
  **Guangdong 519000 (CN)**
- **OUYANG, Chunping**
  **Guangdong 519000 (CN)**
- **MAI, Kaijin**
  **Guangdong 519000 (CN)**
- **DONG, Xueteng**
  **Guangdong 519000 (CN)**
- **ZENG, Xiangbin**
  **Guangdong 519000 (CN)**
- **LU, Changli**
  **Guangdong 519000 (CN)**
- **CAI, Tongmin**
  **Guangdong 519000 (CN)**

(74) Representative: **Petraz, Gilberto Luigi et al**
**GLP S.r.l.**
**Viale Europa Unita, 171**
**33100 Udine (IT)**

(56) References cited:
**CN-A- 101 910 245**
**CN-A- 101 910 245**
**CN-A- 112 694 602**
**JP-A- 2004 256 709**
**JP-A- 2009 155 556**
**JP-A- 2009 155 556**
**US-A1- 2014 275 465**

- **PEPIC ET AL: "Synthesis and characterization of biodegradable aliphatic copolyesters with poly(ethylene oxide) soft segments", EUROPEAN POLYMER JOURNAL, PERGAMON PRESS LTD OXFORD, GB, vol. 44, no. 3, 14 December 2007 (2007-12-14), pages 904 - 917, XP022505400, ISSN: 0014-3057, DOI: 10.1016/ J.EURPOLYMJ.2007.11.035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• PEPIC, D. ZAGAR, E. ZIGON, M. KRZAN, A. KUNAVER, M. DJONLAGIC, J.: "Synthesis and characterization of biodegradable aliphatic copolyesters with poly(ethylene oxide) soft segments", EUROPEAN POLYMER JOURNAL, PERGAMON PRESS LTD OXFORD, GB, vol. 44, no. 3, 14 December 2007 (2007-12-14), GB , pages 904 - 917, XP022505400, ISSN: 0014-3057, DOI: 10.1016/j.eurpolymj.2007.11.035

## Description

## TECHNICAL FIELD

The present invention relates to the technical field of biodegradable polyesters, specifically relates to a polyester, a preparation method therefor and use thereof, and in particular to a polyester with a specific content of dimer(1,4-butanediol), a preparation method therefor and use thereof.

## BACKGROUND

Currently, thermoplastic aromatic polyesters widely used in industry and daily life have good thermal stability and mechanical properties, and are easy to process and low in price. For example, polyethylene terephthalate (PET) and polybutylene terephthalate (PBT) have been extensively applied in the manufacture of fibers, films, and containers. However, these aromatic polyesters are hardly degraded after being discarded. Up to now, no microorganism has yet been observed to directly and obviously degrade aromatic polyesters such as, PET and PBT.

In this context, aliphatic polyesters, as eco-friendly plastics, have been concerned. Aliphatic polyesters can be obtained by the esterification reaction and melt polycondensation between aliphatic dicarboxylic acids and aliphatic diols. The raw material aliphatic dicarboxylic acids (e.g., succinic acid and adipic acid) can be produced by glucose derived from plants via fermentation; aliphatic diols (e.g., ethylene glycol, propylene glycol, and butylene glycol) also can be produced via raw materials derived from plants, which thus can strive for saving fossil fuel resources. Meanwhile, plant can absorb carbon dioxide in the air during its growth process and thus, can make great contributions to the reduction of carbon dioxide emission. Furthermore, aliphatic polyesters are further known to show excellent biodegradability; so to speak, they are triple-eco-friendly plastics.

However, due to the problems such as more side reactions during polymerization and prone thermal degradation, the color of the polymerisates of aliphatic polyesters is not good, which becomes a great challenge to the production of aliphatic polyesters.

For the improvement of the polyester color, it is generally controlled by adding a stabilizer during the polycondensation in the industry, which has become a conventional technology to aromatic polyesters such as PET and PBT. For example, it is indicated in the *(*Rieckmann, T.; Volker, S., 2. Poly(ethylene terephthalate) Polymerization - Mechanism, Catalysis, Kinetics, Mass Transfer and Reactor Design. In Modern Polyesters: Chemistry and Technology of Polyesters and Copolyesters, Scheirs, J.; Long, T. E., Eds. John Wiley & Sons, Ltd.: Chichester, 2003; p 63.) that compounds of phosphoric acid (e.g., triphenyl phosphate and triphenyl phosphite) are added during the polymerization of PET as a stabilizer to greatly reduce the yellowing degree of PET. It is also indicated in WO2018/219708A1 that the addition of 0.03% to 0.04% by weight of a phosphorus compound during the condensation of the aliphatic-aromatic polyester causes it to have a whiteness index of at least 25 according to ASTM E313-73.

JP2009155556A discloses the manufacture of a polyester based on succinic acid, malic acid and butanediol with a titanium based catalyst.

CN212560068U discloses a production system for a biodegradable polyester. The esterification reactor of the production system is connected to a process column; water and tetrahydrofuran produced in the process of esterification together with the excessive 1,4-butanediol, etc. enter the process column for rectification; the bottom of the process column is heated via a liquid heating medium; the recovered 1,4-butanediol discharged from the bottom of the tower was sent back to the reflux inlet of the esterification kettle. In this way, the recovered 1,4-butanediol enters into the reaction system via the reflux inlet and participates in the esterification reaction again. However, such a simple rectification via the process column only distills off low-boiling point water, tetrahydrofuran, etc. from the top of the process column; the remaining substances are totally refluxed to the esterification kettle from the bottom of the process column; these remaining substances contain a large number of 1,4-butanediol polymers and other by-products. These by-products will take part in the polymerization reaction after entering the esterification kettle, leading to the performance deterioration of the subsequent aliphatic-aromatic polyester.

In conclusion, those skilled in the art have not yet recognized that by-product impurities will affect the performance, particularly color of polyesters at present.

## SUMMARY

The object of the present invention is to overcome the shortcomings of the prior art and to provide a polyester with a specific content of dimer(1,4-butanediol), a preparation method therefor, and use thereof.

The aforesaid object of the present invention is achieved by the following technical solution:
In one aspect, provided is a polyester, including repeating units derived from the following components:

a first component A, based on a total molar weight of the first component A, including:

a1) 81-100 mol%, and preferably, 90-100 mol% of succinic acid, or an ester derivative thereof or an anhydride derivative thereof,

and a2) 0-19 mol%, and preferably, 0-10 mol% of a dicarboxylic acid other than succinic acid, or an ester derivative thereof or an anhydride derivative thereof;

a second component B: 1,4-butanediol; and

a third component C: a dimer(1,4-butanediol) having a molecular formula of $HO-CH_2CH_2CH_2CH_2-O-CH_2CH_2CH_2CH_2-OH$; based on the total molar weight of the first component A, a molar content of a repeating unit $-CH_2CH_2CH_2CH_2-O-$ in the third component C is 0.05-3.0 mol%.

It is found in the present invention that based on the total molar weight of the first component A, the molar content of the repeating unit $-CH_2CH_2CH_2CH_2-O-$ in the third component C is controlled to 0.05-3.0 mol%, so that the resin color of the polyester can be effectively improved, and the performance of the obtained polyester will be kept. The first component A is preferably totally succinic acid or an ester derivative thereof or an anhydride derivative thereof.

As a detailed embodiment, the component a2) is selected from one or more of oxalic acid, dimethyl oxalate, malonic acid, dimethyl malonate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenylether dicarboxylic acid, dimethyl 3,4'-diphenylether dicarboxylate, 4,4'-diphenylether dicarboxylic acid, dimethyl 4,4'-diphenylether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), and an ester derivative thereof and an anhydride derivative thereof; preferably, selected from one or more of adipic acid, decanedioic acid, 1,12-dodecanedicarboxylic acid, terephthalic acid, and an ester derivative thereof and an anhydride derivative thereof; more preferably, selected from one or two of adipic acid, decanedioic acid, terephthalic acid, and an ester derivative thereof and an anhydride derivative thereof; and most preferably, being adipic acid, terephthalic acid, or an ester derivative thereof or an anhydride derivative thereof.

In the present invention, the polyester further includes a fourth component D if necessary; the fourth component D is a compound containing at least three functional groups, preferably, a compound containing three to six functional groups, more preferably, selected from one or more of tartaric acid, citric acid, malic acid, fumaric acid, maleic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride; and preferably, selected from one or more of malic acid, citric acid, fumaric acid, maleic acid, and glycerol; preferably, based on the total molar weight of the first component A, the fourth component D has a content of 0.01-1.0 mol%, and further preferably 0.02-0.2 mol%.

The polyester may further include a fifth component E as a chain extender.

The chain extender is one or a mixture of more of an isocyanate, an isocyanurate, a peroxide, an epoxide, oxazoline, oxazine, lactam, carbodiimide and polycarbodiimide that contain two or more functional groups.

The isocyanate containing two or more functional groups may be an aromatic isocyanate or an aliphatic isocyanate, preferably, aromatic diisocyanate or aliphatic diisocyanate. Preferably, the aromatic diisocyanate is preferably toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate. More preferably, the aromatic diisocyanate is diphenylmethane 2,2'-diisocyanate, diphenylmethane 2,4'-diisocyanate, or diphenylmethane 4,4'-diisocyanate.

Preferably, the aliphatic diisocyanate is preferably any linear or branched alkylene diisocyanate or cycloalkylene diisocyanate containing 2-20 carbon atoms. More preferably, the aliphatic diisocyanate is any linear or branched alkylene diisocyanate or cycloalkylene diisocyanate containing 3-12 carbon atoms. The aliphatic diisocyanate may be hexamethylene 1,6-diisocyanate, isophorone diisocyanate, or methylenebis(4-isocyanatocyclohexane). Most preferably, the aliphatic diisocyanate is hexamethylene 1,6-diisocyanate, and isophorone diisocyanate.

The isocyanate containing two or more functional groups may be further tri-(4-isocyanatophenyl) methane with three rings.

Preferably, the isocyanurate containing two or more functional groups may be an aliphatic isocyanurate derived from alkylene diisocyanates or cycloalkylene diisocyanates having 2-20 carbon atoms, preferably, 3-12 carbon atoms, e.g., isophorone diisocyanate or methylenebis(4-isocyanatocyclohexane). The alkylene diisocyanates may be linear or branched compounds, particularly, preferably cyclic tripolymer, pentamer, or higher oligomer isocyanurates based on n-hexamethylene diisocyanates, e.g., hexamethylene 1,6-diisocyanate.

Preferably, the peroxide containing two or more functional groups is preferably benzoyl peroxide, 1,1-di(tert-butylperoxo)-3,3,5-trimethylcyclohexane, 1,1-di(tert-butylperoxo)methylcyclododecane, 4,4-di(butylperoxo) n-butyl valerate, dicumyl peroxide, tert-butyl peroxybenzoate, dibutyl peroxide, $\alpha,\alpha$-di(tert-butylperoxo)diisopropylbenzene, 2,5-dimethyl-2,5-di(tert-butylperoxo)hexane, 2,5-dimethyl-2,5-di(tert-butylperoxo)hexyl-3-yne, and tert-butylcumyl peroxide.

Preferably, the epoxide containing two or more functional groups is preferably hydroquinone, diglycidyl ether, resorcinol diglycidyl ether, 1,6-hexanediol diglycidyl ether, hydrogenated bisphenol A diglycidyl ether, diglycidyl terephthalate, diglycidyl tetrahydrophthalate, diglycidyl hexahydrophthalate, dimethyl diglycidyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethanediol diglycidyl ether, diglycol diglycidyl ether, polyethylene glycol diglycidyl ether, propylene glycol diglycidyl ether, dipropylene glycol diglycidyl ether, polypropylene glycol diglycidyl ether, and polybutylene glycol diglycidyl ether.

The epoxide containing two or more functional groups is preferably a copolymer based on styrene, acrylate, and/or methacrylate and containing an epoxy group; the epoxy group is preferably glycidyl methacrylate (GMA). It has been proved that the beneficial compound is a copolymer having a GMA ratio of higher than 20 wt%, preferably higher than 30 wt%, and more preferably higher than 50 wt%. The epoxide equivalent weight in these copolymers is preferably 150-3000 g/equivalent, and more preferably 200-500 g/equivalent. The weight-average molecular weight (Mw) of the copolymers is preferably 2,000-25,000, and more preferably 3,000-8,000. The number-average molecular weight (Mn) of the copolymers is preferably 400-6,000, and more preferably 1,000-4,000. Polydispersity index (Q=Mw/Mn) is preferably 1.5-5.

The oxazoline/oxazine containing two or more functional groups is preferably dioxazoline or dioxazine, its bridging portion is a single bond, $(CH_2)z$-alkylene, where z = 2, 3 or 4, e.g., methylene, ethyl-1,2-diyl, propyl-1,3-diyl, or phenylene. Specifically, the dioxazoline is 2,2'-di(2-oxazoline), di(2-oxazolinyl)methane, 1,2-di(2-oxazolinyl)ethane, 1,3-di(2-oxazolinyl)propane, 1,4-di(2-oxazolinyl)butane, 2,2'-di(2-oxazoline), 2,2'-di(4-methyl-2-oxazoline), 2,2'-di(4,4'-dimethyl-2-oxazoline), 2,2'-di(4-ethyl-2-oxazoline), 2,2'-di(4,4'-diethyl-2-oxazoline), 2,2'-di(4-propyl-2-oxazoline), 2,2'-di(4-butyl-2-oxazoline), 2,2'-di(4-hexyl-2-oxazoline), 2,2'-di(4-phenyl-2-oxazoline), 2,2'-di(4-cyclohexyl-2-oxazoline), 2,2'-di(4-phenylmethyl-2-oxazoline), 2,2'-p-phenylenedi(4-methyl-2-oxazoline), 2,2'-p-phenylenedi(4,4'-dimethyl-2-oxazoline), 2,2'-m-phenylenedi(4-methyl-2-oxazoline), 2,2'-m-phenylenedi(4,4'-dimethyl-2-oxazoline), 2,2'-hexamethylenedi(2-oxazoline), 2,2'-octamethylenedi(2-oxazoline), 2,2'-decamethylenedi(2-oxazoline), 2,2'-ethylidenedi(4-methyl-2-oxazoline), 2,2'-tetramethylenedi(4,4'-dimethyl-2-oxazoline), 2,2'-9,9'-diphenoxyethanedi(2-oxazoline), 2,2'-cyclohexylenedi(2-oxazoline), or 2,2'-diphenylene(2-oxazoline).

Specifically, dioxazine is 2,2'-di(2-dioxazine), di(2-dioxazinyl)methane, 1,2-di(2-dioxazinyl)ethane, 1,3-di(2-dioxazinyl)propane, 1,4-di(2-dioxazinyl)butane, 1,4-di(2-dioxazinyl)benzene, 1,2-di(2-dioxazinyl)benzene, or 1,3-di(2-dioxazinyl)benzene.

The carbodiimide or polycarbodiimide containing two or more functional groups is preferably N,N'-di-2,6-diisopropylphenyl carbodiimide, N,N'-di-o-tolyl carbodiimide, N,N'-diphenyl carbodiimide, N,N'-dioctyldecyl carbodiimide, N,N'-di-2,6-dimethylphenyl carbodiimide, N-tolyl-N'-cyclohexyl carbodiimide, N,N'-di-2,6-di-tert-butylphenyl carbodiimide, N-tolyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-dicyclohexyl carbodiimide, N,N'-di-p-tolyl carbodiimide, p-phenylenebis-di-o-tolyl carbodiimide, p-phenylenebis-dicyclohexyl carbodiimide, hexamethylenebis-dicyclohexyl carbodiimide, 4,4'-dicyclohexylmethane carbodiimide, ethylidenebisdiphenyl carbodiimide, N,N'-phenylmethyl-carbodiimide, N-octadecyl-N'-phenyl carbodiimide, N-benzyl-N'-phenyl carbodiimide, N-octadecyl-N"-tolyl carbodiimide, N-cyclohexyl-N'-tolyl carbodiimide, N-phenyl-N'-tolyl carbodiimide, N-benzyl-N'-tolyl carbodiimide, N,N'-di-o-ethylphenyl carbodiimide, N,N'-di-p-ethylphenyl carbodiimide, N,N'-di-o-isopropylphenyl carbodiimide, N,N'-di-p-isopropylphenyl carbodiimide, N,N'-di-o-isobutylphenyl carbodiimide, N,N'-di-p-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethylphenyl carbodiimide, N,N'-di-2,4,6-triisopropylphenyl carbodiimide, N,N'-di-2,4,6-triisobutylphenyl carbodiimide, diisopropyl carbodiimide, dimethyl carbodiimide, diisobutyl carbodiimide, dioctyl carbodiimide, tert-butylisopropyl carbodiimide,

di-β-naphthyl carbodiimide, or di-tert-butyl carbodiimide.

Preferably, the fifth component E is added in an amount of 0.01-5 mol% of a total molar weight of the first component A.

Preferably, the polyester has a viscosity number of 100-350 ml/g as determined in a phenol/o-dichlorobenzene solution having a weight ratio of 1:1 in a 25±0.05°C thermostatic water bath in accordance with the provision of GB/T 17931-1999.

Preferably, the polyester has a carboxyl group content of 10-70 mmol/kg, and further preferably, 20-60 mmol/kg.

On the other hand, the present invention further provides a method for preparing the above polyester, including the following steps:

step S1: mixing the first component A, the second component B and a portion of a catalyst (the fourth component D being also added if necessary), heating up to 180-260°C for esterification reaction for 1-4 h in an esterification reactor to obtain an esterification product AB, wherein a molar content of the second component B is usually 1.1-2.0 times the first component A, and the excessive second component B is recycled to the esterification reactor by a purification device connected to the esterification reactor;

step S2: performing primary polycondensation on the esterification product AB in the step S1 under the action of the remaining catalyst for 2-6 h at a reaction temperature of 200-240°C, to obtain a primary polycondensation product; and

step S3: transferring the primary polycondensation product obtained in the step S2 into a final polycondensation kettle for continuous polycondensation at 210-270°C until a reaction product has a viscosity number of 100-250 ml/g as determined in a phenol/o-dichlorobenzene solution having a weight ratio of 1:1 in a 25±0.05°C thermostatic water bath in accordance with the provision of GB/T 17931-1999; and wherein the reaction product has a carboxyl group content of 10-70 mmol/kg; preferably, in the step S1, the catalyst is added in an amount of 0.001-1% of a final weight of the polyester during the preparation of the esterification product AB. Preferably, the catalyst is added in an amount of 0.02-0.2% of the final weight of the polyester. In the step S1, the catalyst is added in an amount of 50-80 wt% of a total weight of the catalyst. The amount of the catalyst added is controlled to make the subsequent machining process more stable. Furthermore, the catalyst may be a tin compound, an antimony compound, a cobalt compound, a lead compound, a zinc compound, an aluminium compound or a titanium compound; more preferably, being a zinc compound, an aluminium compound or a titanium compound; and most preferably, being a titanium compound. The titanium compound, e.g., tetrabutyl orthotitanate or tetraisopropyl orthotitanate, has the advantage of low toxic residue in the product or down-stream product over other compounds. This property is especially important in biodegradable polyesters because it will directly enter the environment in a form of a compost bag or cover film.

Preferably, in the step S1, the purification device connected to the esterification reactor is a combination of a process column and a short-path distiller.

Molecular distillation is a distilling method operated in high vacuum; at this time, the mean free path of steam molecules is greater than the distance between the evaporation surface and condensation surface such that liquid mixture is separated by means of the difference in the evaporation rate of each component in the feed liquid.

Short-path distiller is designed according to the principle of molecular distillation, and is a model to simulate molecular distillation. Due to the distance between its heating surface and the cooling surface is very small, and resistance is very small, it is thus called a short-path distiller. A built-in condenser can function in liquifying vaporized vapor phases instantaneously to shrink volume and thus, can maintain the high vacuum in the equipment. The operating vacuum of the short-path distiller may be up to 0.1 Pa (absolute pressure), which is unreachable to other evaporation/distillation equipment. Therefore, the short-path distiller is especially suitable for the materials that possess a high boiling point at normal pressure and can be hardly isolated by a common separation method. As a novel liquid-liquid separation equipment, the short-path distiller has been successfully applied in many industries.

The short-path distiller may be an SPD short-path distiller from Wuxi Hengyi Chemical Machinery Co., Ltd. (http://www.wxhengyi.com/index.asp).

The process column is mainly to separate substances with a low-boiling point, e.g., tetrahydrofuran, water and other by-products. These substances with a low-boiling point flow out of the tower top and then flow into a tetrahydrofuran purification apparatus; substances with a high-boiling point, 1,4-butanediol and other by-products flow out of the tower bottom, and flow into a SPD short-path distiller, and recovered into the esterification reactor after being purified by the short-path distiller.

In the step S2, the remaining catalyst may be added if necessary. In the step S2, the reaction temperature is more preferably 210-230°C. In the step S2, the pressure is generally set as 0.1-0.5 bar, and preferably, 0.2-0.4 bar at the beginning; and the pressure is generally set as 5-200 mbar, and more preferably, 10-100 mbar at the end of the S2.

In the step S3, a passivator may be mixed with a prepolyester if necessary. The available passivator is usually a phosphorus compound including phosphoric acid, phosphorous acid, and esters thereof. A passivator is usually added to

the step S3 when a high-active titanium catalyst is used in the system.

In the step S3, the reaction temperature of the continuous polycondensation is preferably 230-260°C. In the step S3, the pressure is usually controlled within 0.2-5 mbar, and more preferably, 0.5-3 mbar at the beginning the reaction. The reaction time of the continuous polycondensation is preferably 2-7 h, and more preferably 3-6 h. The carboxyl group content in the polyester after the reaction in the S3 is preferably 20-60 mmol/kg.

At the end of the step S3, a step S4 is performed as follows if necessary: adding the polyester obtained in the step S3 to a twin-screw extruder together with a fifth component E as a chain extender in an amount of 0.01-5.0 mol% (based on the total molar weight of the first component A) for retention for 0.5-15 min at a reaction temperature of 200-270°C to obtain a final polyester; the final polyester has a viscosity number of 150-350 ml/g as determined in a phenol/o-dichlorobenzene solution having a weight ratio of 1:1 in a 25±0.05°C thermostatic water bath in accordance with the provision of GB/T 17931-1999.

In a further aspect, the present invention further provides a polyester molding composition, including the following components in weight percentage:

5-95 wt% of the above polyester;
5-95 wt% of an additive and/or other polymers; and
0-70 wt% of a reinforcing material and/or a filler.

As a detailed embodiment, the additive and/or other polymers may be, at least one or more components selected from aliphatic polyesters, polycaprolactones, starch, cellulose, polyhydroxyalkanoates, and polylactic acids.

In a still further aspect, the present invention further provides use of the above polyester in preparing a compost-degradable product; the compost-degradable product is a fiber, a film, or a container, etc.

The present invention further provides use of the above polyester in preparing a straw. Polyester may be blended with polylactic acid (PLA), etc. and modified, and then used as a raw material of a straw. The straw is required to have certain hydrolysis resistance as it contacts liquid. Moreover, considering the degradable requirement, the hydrolysis resistance should be not too strong, or otherwise the degradation cycle is too long. Based on the practical use, the degradation property is evaluated by testing the 30-day weight retention rate. The 30-day weight retention rate should be within a range of 50-60% better, and the higher the retention rate is, the better the degradation property is within such a range. When the 30-day weight retention rate is greater than 65%, the degradation property is too poor, when it is lower than 45%, degradation is too fast.

Compared with the prior art, the present invention has the following beneficial effects:
The present invention provides a polyester and a preparation method therefor. Based on the total molar weight of the diacid, the molar content of the repeating unit $-CH_2CH_2CH_2CH_2-O-$ in dimer(1,4-butanediol) is controlled to 0.05-3.0 mol%, and thus, the resin color of the polyester can be effectively improved, and the performance of the polyester will be also kept.

## BRIEF DESCRIPTION OF DRAWINGS

FIG. 1 shows $^1H$ NMR of a polyester butylene succinate (PBS) (derived from 1,4-butanediol B and succinic acid S) in the Example 1 of the present invention measured by an AV 500 nuclear magnetic resonance spectrometer from Bruker, and affiliation of the PBS backbone structure;
FIG. 2 shows positions (peak e) of the 4 hydrogen atom peaks of the two $CH_2$ units linked to an ether bond in a dimer(1,4-butanediol) structure of the polyester PBS in the Example 1 of the present invention;
FIG. 3 is a schematic diagram showing an assembled apparatus of a process column connected to an esterification reactor and a short-path distiller in the present invention; and
FIG. 4 is a schematic diagram showing a primary process column apparatus connected to a traditional esterification reactor.

## DETAILED DESCRIPTION OF EMBODIMENTS

Raw materials, reagents and solvents used in the present invention, are commercially available without any treatment, unless otherwise specified. The present invention will be further described specifically in combination with examples; however, the embodiments of the present invention are not limited to the following examples. In addition, "part(s)" and "%" in the description, unless otherwise specified, denote "part(s) by mass" and "mass%", respectively.

Test method:

Method for testing the purity of fresh 1,4-butanediol, recovered coarse 1,4-butanediol, recovered high-purity 1,4-butanediol is as follows:
The purity of 1,4-butanediol is tested by reference to the national standard GB/T 24768-2009 1,4-Butanediol for industrial use.

The fresh 1,4-butanediol in all the examples and comparative examples has the same purity of not less than 99.7%, and purchased from MarkorChem. Raw materials such as terephthalic acid, succinic acid, adipic acid, glycerol, tetrabutyl orthotitanate, and phosphorous acid are commercially available.

Method for testing the content of the third component C in the polyester (PBS obtained by the reaction between succinic acid and 1,4-butanediol in Example 1 of the present invention is set as an example):
10 mg of the polyester sample were taken and dissolved into 0.6 ml of deuterated chloroform, and then $^1H$ NMR was measured by an AV 500 nuclear magnetic resonance spectrometer from Bruker at room temperature, and the chloroform solvent peak (7.26 ppm) was calibrated.

As can be seen from the reference: Park, Y. H.; Cho, C. G., Synthesis and characterization of poly[(butylene succinate)-co-(butylene terephthalate)J-b-poly(tetramethylene glycol) segmented block copolymer. J. Appl. Polym. Sci. 2001, 79(11): 2067-2075., the 4 hydrogen atoms in the succinic acid repeating units appeared nearby 2.6 ppm; the 4 hydrogen atoms of the two $CH_2$ units, in the succinic acid repeating units of PBS, adjacent to the ester group appeared nearby 4.1 ppm; and the 4 hydrogen atoms of the central two $CH_2$ units, in the butanediol repeating units of PBS appeared nearby 1.69 ppm. The results are shown in FIG. 1. The reference also provides that the peaks of the 4 hydrogen atoms in the two $CH_2$ units linked to the ether bond in the polyether structure copolymerized via poly(1,4-butanediol) appeared nearby 3.4 ppm.

Furthermore, as can be seen from the reference: Miles, W. H.; Ruddy, D. A.; Tinorgah, S.; Geisler, R. L., Acylative Dimerization of Tetrahydrofuran Catalyzed by Rare-Earth Triflates. Synth. Commun. 2004, 34(10): 1871-1880, the $^1H$ NMR chemical shift (labeled on the corresponding carbon atoms of the structural formula, unit: ppm) of the product obtained from dimer(1,4-butanediol) and acetic acid is shown in the following figure:

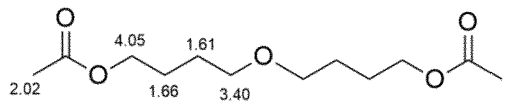

1a

The above two references validate the following conclusion together: peaks of the 4 hydrogen atoms in the two $CH_2$ units linked to the ether bond in PBS of dimer(1,4-butanediol) should appear nearby 3.4 ppm, and are triple peaks, as shown in FIG. 2.

It can be thus calculated by the following formula: based on the total molar weight of the first component A, the molar content of the repeating unit $-CH_2CH_2CH_2CH_2-O-$ in the third component C dimer(1,4-butanediol) is as follows:

$$X_C = \frac{\frac{I_e}{2}}{\frac{I_a + I_c}{8}} \times 100\% = \frac{4I_e}{I_a + I_c} \times 100\%$$

where,

$I_e$ denotes an integral area of the peaks of the 4 hydrogen atoms of the two $CH_2$ units linked to the ether bond in a dimer(1,4-butanediol) structure of the PBS;
$I_a$ and $I_c$ denote an integral area of the peaks of the 4 hydrogen atoms of the central two $CH_2$ units in the 1,4-butanediol repeating units, and an integral area of the peaks of the 4 hydrogen atoms of the two $CH_2$ units adjacent to the ester bond in the 1,4-butanediol repeating units, respectively.

Viscosity number of the polyester:
The viscosity number was determined in a phenol/o-dichlorobenzene solution having a weight ratio of 1:1 in a 25±0.05°C thermostatic water bath in accordance with the provision of GB/T 17931-1999; the sample has a concentration of 5 mg/ml.

Color of the polyester: the pelletized and dried sample was taken and tested in accordance with the provision of GB/T 14190-2017 5.5.2 Method B (Dry method). Hunter Lab, L, a, and b values were obtained via the test and Hunter whiteness was defined as follows:

$$WH = 100-[(100-L)^2+a^2+b^2]^{1/2}$$

The greater the WH is, the better the sample color is.

Carboxyl group content (unit: mmol/kg):

About 1.0 g of the polyester sample was dissolved into 60 ml of dichloromethane, subjected to heating reflux and completely dissolved, and then titrated with about 0.01 mol/l of KOH ethanol solution. The carboxyl group content is calculated by the following formula:

$$CV = \frac{M \times (V - V_0)}{m_s} \times 10^3$$

where, M is the concentration of the KOH ethanol solution with a unit of mol/l; V is the volume of the titrating solution consumed during the titration of the polyester sample with a unit of ml; $V_0$ is the volume of the titrating solution consumed during the titration of a blank dichloromethane solvent with a unit of ml; and ms is the mass of the polyester sample with a unit of g.

30-day weight retention rate:

The biodegradation experiment of the polyester is performed by reference to the test of GB/T 19277-2003. The polyester test sample was first pressed to a film having a thickness of 0.10 mm, and then cut into a 1.2 cm×2.0 cm sample sheet; the sample weight was denoted as $a_0$ at this time. The sample sheet was then embedded into composting soil and put to an incubator; the composting soil was the city compost after being aerated for 56-70 d and sieved; the experimental temperature was kept at (58±2)°C, 30 d later, the composted sample sheet was taken out, washed, dried and weighed; the sample weight was denoted as $a_1$ at this time. The 30-day weight retention rate= $a_1/a_0$×100%. The higher the 30-day weight retention rate is, the more difficult the material degradation is; and the lower the 30-day weight retention rate is, the faster the material degradation rate is. Based on the practical use, the 30-day weight retention rate is within a range of 50-60% better, and the higher the retention rate is, the better the degradation property is within such a range. When the 30-day weight retention rate is greater than 65%, the degradation property is too poor, when it is lower than 45%, degradation is too fast.

## Example 1

S1: an assembled apparatus (a process column connected to an esterification reactor + a short-path distiller) as shown in FIG. 3 was used; 800 kg/h of succinic acid, 727 kg/h of fresh 1,4-butanediol, 311 kg/h of recovered high-purity1,4-butanediol (purity: 99.1%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain anesterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

## Example 2

S1: an assembled apparatus (a process column connected to an esterification reactor + a short-path distiller) as shown in FIG. 3 was used; 800 kg/h of succinic acid, 727 kg/h of fresh 1,4-butanediol, 31 kg/h of recovered coarse 1,4-butanediol (purity: 98.3%, derived from the bottom of the process column in FIG. 3), 280 kg/h of recovered high-purity 1,4-butanediol (purity: 99.3%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to an the esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 3

S1: an assembled apparatus (a process column connected to an esterification reactor + a short-path distiller) as shown in FIG. 3 was used; 800 kg/h of succinic acid, 727 kg/h of fresh 1,4-butanediol, 93 kg/h of recovered coarse 1,4-butanediol (purity: 98.2%, derived from the bottom of the process column in FIG. 3), 218 kg/h of recovered high-purity 1,4-butanediol (purity: 99.2%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 4

S1: an assembled apparatus (a process column connected to an esterification reactor + a short-path distiller) as shown in FIG. 3 was used; 800 kg/h of succinic acid, 727 kg/h of fresh 1,4-butanediol, 124.4 kg/h of recovered coarse 1,4-butanediol (purity: 98.1%, derived from the bottom of the process column in FIG. 3), 186.6 kg/h of recovered high-purity 1,4-butanediol (purity: 99.4%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 5

S1: an assembled apparatus (a process column connected to an esterification reactor + a short-path distiller) as shown in FIG. 3 was used; 800 kg/h of succinic acid, 727 kg/h of fresh 1,4-butanediol, 155.5 kg/h of recovered coarse 1,4-butanediol (purity: 98.4%, derived from the bottom of the process column in FIG. 3), 155.5kg/h of recovered high-purity 1,4-butanediol (purity: 99.3%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 6

S1: an assembled apparatus (a process column connected to an esterification reactor + a short-path distiller) as shown in FIG. 3 was used; 800 kg/h of succinic acid, 727 kg/h of fresh 1,4-butanediol, 218 kg/h of recovered coarse 1,4-butanediol (purity: 98.1%, derived from the bottom of the process column in FIG. 3), 93 kg/h of recovered high-purity 1,4-butanediol (purity: 99.2%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 7

S1: an assembled apparatus (a process column connected to an esterification reactor + a short-path distiller) as shown in FIG. 3 was used; 59 kg/h of terephthalic acid, 800 kg/h of succinic acid, 765 kg/h of fresh 1,4-butanediol, 98 kg/h of recovered coarse 1,4-butanediol (purity: 98.3%, derived from the bottom of the process column in FIG. 3), 229 kg/h of recovered high-purity 1,4-butanediol (purity: 99.1%, derived from the bottom of the short-path distiller in FIG. 3), 0.98 kg/h of glycerol and 0.475 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.255 kg/h of tetrabutyl orthotitanate were added to the reactor for reacting for 3-5 h; when the pressure reduced to 100 mbar, most of the excessive 1,4-butanediol were distilled off.

S3: 0.19 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 8

S1: an assembled apparatus (a process column connected to an esterification reactor + a short-path distiller) as shown in FIG. 3 was used; 800 kg/h of succinic acid, 727 kg/h of fresh 1,4-butanediol, 93 kg/h of recovered coarse 1,4-butanediol (purity: 98.4%, derived from the bottom of the process column in FIG. 3), 218 kg/h of recovered high-purity 1,4-butanediol (purity: 99.3%, derived from the bottom of the short-path distiller in FIG. 3), and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Example 9

S1: an assembled apparatus (a process column connected to an esterification reactor + a short-path distiller) as shown in FIG. 3 was used; 53 kg/h of adipic acid, 800 kg/h of succinic acid, 765 kg/h of fresh 1,4-butanediol, 98 kg/h of recovered coarse 1,4-butanediol (purity: 98.2%, derived from the bottom of the process column in FIG. 3), 230 kg/h of recovered high-purity 1,4-butanediol (purity: 99.3%, derived from the bottom of the short-path distiller in FIG. 3), and 0.475

kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.255 kg/h of tetrabutyl orthotitanate were added to the reactor for reacting for 3-5 h; when the pressure reduced to 100 mbar, most of the excessive 1,4-butanediol were distilled off.

S3: 0.19 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Comparative Example 1

S1: a traditional single-process column esterification reactor as shown in FIG. 4 was used; 800 kg/h of succinic acid, 727 kg/h of fresh 1,4-butanediol, 311 kg/h of recovered coarse 1,4-butanediol (purity: 98.2%), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Comparative Example 2

S1: a traditional single-process column as shown in FIG. 4 was used; meanwhile, the reflux valve at the bottom of the process column was turned off to avoid the backflow of butanediol into the esterification reactor. 800 kg/h of succinic acid, 1,038 kg/h of fresh 1,4-butanediol, 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an underwater granulator, and dried to obtain the final polyester product. The performance results are shown in Table 1.

Comparative Example 3

S1: an assembled apparatus (a process column connected to an esterification reactor + a short-path distiller) as shown in FIG. 3 was used; 290 kg/h of terephthalic acid, 594 kg/h of succinic acid, 727 kg/h of fresh 1,4-butanediol, 93 kg/h of recovered coarse 1,4-butanediol (purity: 98.0%, derived from the bottom of the process column in FIG. 3), 218 kg/h of recovered high-purity 1,4-butanediol (purity: 99.3%, derived from the bottom of the short-path distiller in FIG. 3), 0.93 kg/h of glycerol and 0.449 kg/h of tetrabutyl orthotitanate were physically mixed in the esterification reactor at room temperature, and then the mixture was subjected to esterification reaction for 60-120 min at 200°C, to obtain an esterification product AB.

S2: the esterification product AB entered a vertical-stirred full-mixed reactor after going through a static mixer; at the beginning, the pressure was 0.3 bar; after the reactor was heated up to 220°C, 0.241 kg/h of tetrabutyl orthotitanate were added to the reactor for reacting for 3-5 h; when the pressure reduced to 100 mbar, most of the excessive 1,4-butanediol were distilled off.

S3: 0.18 kg/h of phosphorous acid were added to the reaction mixture of S2, meanwhile, the reaction mixture was transferred to a final polycondensation kettle for further polycondensation for 3-5 h at 240°C and a pressure of 1 mbar; the remaining excessive 1,4-butanediol and other by-products were distilled off. The polyester was then granulated with an

underwater granulator, and dried to obtain the final polyester product. The performance results are shown in Table 1.

Table 1 Performance test results of the Examples 1-9 and Comparative Example 1-3

| | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|
| Glycerol | Present | Present | Present | Present | Present | Present | Present | Absent | Present | Present | Present | Present |
| Terephthalic acid/-mol% | 0 | 0 | 0 | 0 | 0 | 0 | 5 | 0 | 0 | 0 | 0 | 25.8 |
| Succinic acid/mol% | 100 | 100 | 100 | 100 | 100 | 100 | 95 | 100 | 95 | 100 | 100 | 74.2 |
| Adipic acid/mol% | 0 | 0 | 0 | 0 | 0 | 0 | 0 | 0 | 5 | 0 | 0 | 0 |
| *Molar content* (*$X_C$*/mol%) *of the repeating unit $-CH_2CH_2CH_2CH_2-O-$* | 0.057 | 0.11 | 0.25 | 0.46 | 0.83 | 2.6 | 0.24 | 0.23 | 0.24 | 3.8 | 0.033 | 0.26 |
| Hunter whiteness | 81.1 | 78.3 | 75.4 | 72.6 | 70.5 | 64.3 | 74.1 | 74.9 | 75.2 | 56.1 | 82.9 | 74.3 |
| Carboxyl group/-mmol/kg | 34 | 35 | 33 | 36 | 37 | 38 | 32 | 34 | 30 | 32 | 33 | 38 |
| Viscosity number/ml/g | 155 | 157 | 162 | 159 | 163 | 160 | 159 | 142 | 165 | 153 | 158 | 160 |
| 30-day weight retention rate/% | 50 | 51 | 52 | 50 | 53 | 52 | 50 | 48 | 47 | 51 | 66 | 79 |

From Examples 1 to 6, based on the total molar weight of the first component A, the repeating unit $-CH_2CH_2CH_2CH_2-O-$ in the third component C has a molar content of 0.05-3.0 mol%, leading to a higher whiteness and a better 30-day weight retention rate. In Example 7, due to the structure rigidity of the benzene ring in terephthalic acid, the 30-day weight retention rate also increases, but color is not very good. In Example 8, the viscosity number and 30-day weight retention rate decrease to a certain extent due to the absence of glycerol. In Example 9, the 30-day weight retention rate decreases slightly, but is still within the commercially acceptable range due to the presence of adipic acid.

In Comparative Example 1, the molar content of the repeating unit $-CH_2CH_2CH_2CH_2-O-$ exceeds the range, leading to poor color of the resin. Similarly, in the resin obtained in Comparative Example 2, the molar content of the repeating unit $-CH_2CH_2CH_2CH_2-O-$ in the third component C is too low; the resin has a fine color, but has a too high 30-day weight retention rate; moreover, the excessive butanediol may not be recovered; the running cost of the production line is expensive, and there is thus no commercial value. In Comparative Example 3, the content of terephthalic acid is too high, and the degradation property of the resin is poor (too high 30-day weight retention rate).

Example 10

Because the recovered 1,4-butanediol may contain multiple products obtained after the polymerization of 1,4-butanediol, e.g., (1,4-butanediol) and poly(1,4-butanediol), to further verify the correlation between the resin color and each of these products, the correlations among different types of dimer(1,4-butanediol) as well as poly(1,4-butanediol) and the resin color were studied. The raw materials 1,4-butanediol used in this example were all fresh 1,4-butanediol having a purity of not less than 99.7%.

As can be seen the reference (Alexander, K.; Schniepp, L. E., 4,4'-Dichlorodibutyl Ether and its Derivatives from Tetrahydrofuran. J. Am. Chem. Soc. 1948, 70(5): 1839-1842.), dimer(1,4-butanediol) was synthesized; poly(1,4-butanediol) having the Mn of 1000 and 650 were purchased from Sigma-Aldrich.

Example 10.1

Under the protection of high-purity nitrogen, 2.36 kg of succinic acid, 3.02 kg of 1,4-butanediol, 20 g of dimer(1,4-butanediol), 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.2

Under the protection of high-purity nitrogen, 2.36 kg of succinic acid, 3.02 kg of 1,4-butanediol, 10 g of dimer(1,4-butanediol), 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.3

Under the protection of high-purity nitrogen, 2.36 kg of succinic acid, 3.02 kg of 1,4-butanediol, 5 g of dimer(1,4-butanediol), 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.4

Under the protection of high-purity nitrogen, 2.36 kg of succinic acid, 3.02 kg of 1,4-butanediol, 2.5 g of dimer(1,4-butanediol), 2.75 g of glycerol, and 2.02 g of titanium tetrabutoxide were put into a reaction kettle, heated up to 220-240°C

and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.5

Under the protection of high-purity nitrogen, 2.36 kg of succinic acid, 3.02 kg of 1,4-butanediol, 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.6

Under the protection of high-purity nitrogen, 2.36 kg of succinic acid, 3.02 kg of 1,4-butanediol, 2.26 g of poly(1,4-butanediol) (Sigma-Aldrich, Mn: about 1000), 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Example 10.7

Under the protection of high-purity nitrogen, 2.36 kg of succinic acid, 3.02 kg of 1,4-butanediol, 2.28 g of poly(1,4-butanediol) (Sigma-Aldrich, Mn ~650), 2.75 g of glycerol, and 2.02 g of titanium tetrabutoxide were put into a reaction kettle, heated up to 220-240°C and kept for 120 min. 0.52 g of phosphorous acid were then put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the polyester product. The performance results are shown in Table 2.

Table 2

| | Example 10.1 | Example 10.2 | Example 10.3 | Example 10.4 | Example 10.5 | Example 10.6 | Example 10.7 |
|---|---|---|---|---|---|---|---|
| Feeding amount of the dimer(1,4-butanediol)/g | 20 | 10 | 5 | 2.5 | | | |
| Feeding amount of the poly(1,4-butanediol)/g | | | | | | 2.26 | 2.28 |
| Molecular weight of the dimer(1,4-butanediol) | 162 | 162 | 162 | 162 | | | |
| Molecular weight of the poly(1,4-butanediol) | | | | | | 1000 | 650 |
| *Molar content ($X_C$/mol%) of the repeating unit* $-CH_2CH_2CH_2CH_2-O-$ | 1.27 | 0.66 | 0.36 | 0.19 | 0.031 | 0.20 | 0.19 |
| Hunter whiteness | 67.3 | 71.1 | 74.1 | 76.5 | 81.8 | 81.4 | 81.5 |
| Carboxyl group/mmol/kg | 37 | 36 | 39 | 35 | 38 | 37 | 34 |
| Viscosity number/ml/g | 158 | 155 | 156 | 160 | 161 | 153 | 159 |

As can be seen from the Examples 10.5-10.1 of Table 2, the resin color gets worse obviously with the increase of

the dimer(1,4-butanediol) added. Meanwhile, the resin color is not obviously affected when other types of poly(1,4-butanediol) having a higher molecular weight (Examples 10.6 and 10.7) are added to the polymerization system. The data of Example 10 further indicates that the resin color is affected by dimer(1,4-butanediol), and the higher the content of the dimer(1,4-butanediol), the worse the resin color is.

Finally, it should be indicated that the above examples are merely used to specify the technical solutions of the present invention, but are not construed as limiting the protection scope of the present invention. Even though the present invention is described specifically with reference to the preferred embodiments, it is understood that those skilled in the art can still amend the technical solutions of the present invention, or make equivalent substitutions on a portion of the technical solutions of the present invention in the premise of not departing from the scope of the claims.

## Claims

1. A polyester, comprising repeating units derived from the following components:

    a first component A, based on a total molar weight of the first component A, comprising:

        a1) 81-100 mol%, and preferably, 90-100 mol% of succinic acid, or an ester derivative thereof or an anhydride derivative thereof,
        and a2) 0-19 mol%, and preferably, 0-10 mol% of a dicarboxylic acid other than succinic acid, or an ester derivative thereof or an anhydride derivative thereof;

    a second component B: 1,4-butanediol; and
    a third component C: a dimer(1,4-butanediol) having a molecular formula of $HO-CH_2CH_2CH_2CH_2-O-CH_2CH_2CH_2CH_2-OH$, and based on the total molar weight of the first component A, wherein a molar content of a repeating unit $-CH_2CH_2CH_2CH_2-O-$ in the third component C is 0.05-3.0 mol%.

2. The polyester according to claim 1, wherein the first component A is totally succinic acid, or an ester derivative thereof or an anhydride derivative thereof.

3. The polyester according to claim 1, wherein the component a2) is selected from one or more of oxalic acid, dimethyl oxalate, malonic acid, dimethyl malonate, methylsuccinic acid, glutaric acid, dimethyl glutarate, bis(2-hydroxyethyl) glutarate, bis(3-hydroxypropyl) glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenylether dicarboxylic acid, dimethyl 3,4'-diphenylether dicarboxylate, 4,4'-diphenylether dicarboxylic acid, dimethyl 4,4'-diphenylether dicarboxylate, 3,4'-phenylthioether dicarboxylic acid, dimethyl 3,4'-phenylthioether dicarboxylate, 4,4'-diphenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), and an ester derivative thereof and an anhydride derivative thereof;

    preferably, selected from one or more of adipic acid, decanedioic acid, 1,12-dodecanedicarboxylic acid, terephthalic acid, and an ester derivative thereof and an anhydride derivative thereof;
    more preferably, selected from one or two of adipic acid, decanedioic acid, terephthalic acid, and an ester derivative thereof and an anhydride derivative thereof; and
    most preferably, being adipic acid, terephthalic acid, or an ester derivative thereof or an anhydride derivative thereof.

4. The polyester according to any one of claims 1-3, further comprising a fourth component D, wherein the fourth

component D is a compound comprising at least three functional groups, preferably, a compound comprising three to six functional groups, and more preferably, selected from one or more of tartaric acid, citric acid, malic acid, fumaric acid, maleic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride, and preferably, selected from one or more of malic acid, citric acid, fumaric acid, maleic acid, and glycerol;
preferably, based on the total molar weight of the first component A, the fourth component D has a content of 0.01-1.0 mol%, and further preferably 0.02-0.2 mol%.

**5.** The polyester according to any one of claims 1-4, further comprising a fifth component E as a chain extender, wherein preferably, the fifth component E is selected from one or more of an isocyanate, an isocyanurate, a peroxide, an epoxide, oxazoline, oxazine, lactam, carbodiimide and polycarbodiimide comprising two or more functional groups, preferably, being an isocyanate comprising two or more functional groups, and more preferably, being hexamethylene diisocyanate;
preferably, based on the total molar weight of the first component A, the fifth component E has a content of 0.01-5.0 mol%.

**6.** The polyester according to any one of claims 1-5, wherein the polyester has a viscosity number of 100-350 ml/g as determined in a phenol/o-dichlorobenzene solution having a weight ratio of 1:1 in a 25±0.05°C thermostatic water bath in accordance with the provision of GB/T 17931-1999;
preferably, the polyester has a carboxyl group content of 10-70 mmol/kg, and further preferably, 20-60 mmol/kg.

**7.** A method for preparing the polyester according to any one of claims 1-6, comprising the following steps:

step S1: mixing a first component A, a second component B and a portion of a catalyst (a fourth component D being also added if necessary), and then heating up to 180-260°C for esterification reaction for 1-4 h in an esterification reactor to obtain an esterification product AB, wherein a molar content of the second component B is usually 1.1-2.0 times that of the first component A, and the excessive second component B is recycled to the esterification reactor by a purification device connected to the esterification reactor;
step S2: performing primary polycondensation on the esterification product AB in the step S1 under the action of the remaining catalyst for 2-6 h at a reaction temperature of 200-240°C, to obtain a primary polycondensation product; and
step S3: transferring the primary polycondensation product obtained in the step S2 into a final polycondensation kettle for continuous polycondensation at a temperature of 210-270°C until a reaction product reaches a viscosity number of 100-250 ml/g as determined in a phenol/o-dichlorobenzene solution having a weight ratio of 1:1 in a 25 ±0.05°C thermostatic water bath in accordance with the provision of GB/T 17931-1999, and the reaction product has a carboxyl group content of 10-70 mmol/kg;
wherein preferably, in the step S1, the catalyst is added in an amount of 0.001-1%, and further preferably, 0.02-0.2% of a final weight of the polyester;
preferably, in the step S1, the catalyst is added in an amount of 50-80 wt% of a total weight of the catalyst;
preferably, the catalyst is a tin compound, an antimony compound, a cobalt compound, a lead compound, a zinc compound, an aluminium compound or a titanium compound, preferably, being a zinc compound, an aluminium compound or a titanium compound, and more preferably, being tetrabutyl orthotitanate or tetraisopropyl orthotitanate;
preferably, in the step S1, the purification device is a combination of a process column and a short-path distiller;
preferably, in the step S2, the reaction temperature is 210-230°C;
preferably, in the step S2, a pressure is 0.1-0.5 bar, and preferably, 0.2-0.4 bar at the beginning; and a pressure is 5-200 mbar, and preferably, 10-100 mbar at the end;
preferably, the step S3 further comprises a step of adding a passivator to a reaction system;
preferably, the passivator is a phosphorus compound comprising phosphoric acid, phosphorous acid, and esters thereof;
preferably, in the step S3, the temperature of the continuous polycondensation is 230-260°C;
preferably, in the step S3, a pressure is 0.2-5 mbar, and preferably, 0.5-3 mbar at the beginning;
preferably, in the step 3, a reaction time is 2-7 h, and preferably 3-6 h;
preferably, in the step S3, the reaction product has a carboxyl group content of 20-60 mmol/kg;
preferably, at the end of the step S3, if necessary, a step S4 is conducted: adding the polyester obtained in the step S3 to a twin-screw extruder together with a fifth component E in an amount of 0.01-5.0 mol% (based on the total molar weight of the first component A) for retention for 0.5-15 min at a reaction temperature of 200-270°C to obtain

a final polyester, wherein the final polyester has a viscosity number of 150-350 ml/g as determined in a phenol/o-dichlorobenzene solution having a weight ratio of 1:1 in a 25±0.05°C thermostatic water bath in accordance with the provision of GB/T 17931-1999.

**8.** A polyester molding composition, comprising the following components in weight percentage:

5-95 wt% of the polyester according to any one of claims 1-6;
5-95 wt% of an additive and/or other polymers; and
0-70 wt% of a reinforcing material and/or a filler.

**9.** Use of the polyester according to any one of claims 1-6 in preparing a compost-degradable product, wherein the compost-degradable product is a fiber, a film, or a container.

**10.** Use of the polyester according to any one of claims 1-6 in preparing a straw.

## Patentansprüche

**1.** Polyester, umfassend wiederkehrende Einheiten, die von den folgenden Komponenten abgeleitet sind:

einer ersten Komponente A, die auf einem gesamten Molargewicht der ersten Komponente A basiert, umfassend:

a1) 81-100 Mol%, und vorzugsweise 90-100 Mol% von Succinylsäure, oder ein Esterderivat davon oder ein Anhydridderivat davon,
und a2) 0-19 Mol%, und vorzugsweise 0-10 Mol% einer Dicarbonsäure anders als Succinylsäure, oder ein Esterderivat davon oder ein Anhydridderivat davon;

einer zweiten Komponente B: 1,4-Butandiol; und
einer dritten Komponente C: einem Dimer(1,4-Butandiol) mit einer molekularen Formel von $HO-CH_2CH_2CH_2CH_2-O-CH_2CH_2CH_2CH_2-OH$, und basierend auf dem gesamten Molargewicht der ersten Komponente A, worin ein Molgehalt einer wiederkehrende Einheit $-CH_2CH_2CH_2CH_2-O-$ in der dritten Komponente C 0.05-3.0 Mol% ist.

**2.** Polyester nach Anspruch 1, worin die erste Komponente A völlig Succinylsäure, oder ein Esterderivat davon oder ein Anhydridderivat davon ist.

**3.** Polyester nach Anspruch 1, worin die Komponente a2) aus einer bzw. einem oder mehreren von Folgenden ausgewählt ist: Oxalsäure, Dimethyloxalat, Malonsäure, Dimethylmalonat, Methylsuccinylsäure, Glutarsäure, Dimethylglutarat, Bis(2-Hydroxyethyl)glutarat, Bis(3-Hydroxypropyl)glutarat, Bis(4-Hydroxybutyl)glutarat, 2-Methylglutarsäure, 3-Methylglutarsäure, Adipinsäure, Dimethyladipat, Bis(2-Hydroxyethyl)adipat, Bis(3-Hydroxypropyl)adipat, Bis(4-Hydroxybutyl)adipat, 3-Methyladipinsäure, 2,2,5,5-Tetramethyladipinsäure, Pimelinsäure, Korksäure, Azelainsäure, Dimethylazelat, Decandisäure, 1,11-Undecandicarbonsäure, 1,10-Decandicarbonsäure, Undecandisäure, 1,12-Dodecandicarbonsäure, Hexadecandisäure, Eicosandisäure, Tetracosandisäure, Dimersäure, Terephthalsäure, Dimethylterephthalat, Bis(2-Hydroxyethyl)terephthalat, Bis(3-Hydroxypropyl)terephthalat, Bis(4-Hydroxybutyl)terephthalat, Isophthalsäure, Dimethylisophthalat, Bis(2-Hydroxyethyl)isophthalat, Bis(3-Hydroxypropyl) isophthalat, Bis(4-Hydroxybutyl)isophthalat, 2,6-Naphthalendicarbonsäure, Dimethyl 2,6-Benzoldicarboxylat, 2,7-Naphthalendicarbonsäure, Dimethyl 2,7-Benzoldicarboxylat, 3,4'-Diphenyletherdicarbonsäure, Dimethyl 3,4'-Diphenyletherdicarboxylat, 4,4'-Diphenyletherdicarbonsäure, Dimethyl 4,4'-Diphenyletherdicarboxylat, 3,4'-Phenylthioetherdicarbonsäure, Dimethyl 3,4'-Phenylthioetherdicarboxylat, 4,4'-Diphenylthioetherdicarbonsäure, Dimethyl 4,4'-Phenylthioetherdicarboxylat, 3,4'-Diphenylsulfondicarbonsäure, Dimethyl 3,4'-Diphenylsulfondicarboxylat, 4,4'-Diphenylsulfondicarbonsäure, Dimethyl 4,4'-Diphenylsulfondicarboxylat, 3,4'-Benzophenondicarbonsäure, Dimethyl 3,4'-Benzophenondicarboxylat, 4,4'-Benzophenondicarbonsäure, Dimethyl 4,4'-Benzophenondicarboxylat, 1,4-Naphthalendicarbonsäure, Dimethyl 1,4-Naphthalendicarboxylat, 4,4'-Methylenbis(Benzoesäure), 4,4'-Methylenbis(Dimethylbenzoat) und einem Esterderivat davon und einem Anhydridderivat davon;

bevorzugt aus einer bzw. einem oder mehreren von Folgenden ausgewählt ist: Adipinsäure, Decandisäure, 1,12-Dodecandicarbonsäure, Terephthalsäure und einem Esterderivat davon und einem Anhydridderivat davon;

bevorzugter aus einer bzw. einem oder mehreren von Folgenden ausgewählt ist: Adipinsäure, Decandisäure, Terephthalsäure und einem Esterderivat davon und einem Anhydridderivat davon; und
am bevorzugsten Adipinsäure, Terephthalsäure oder einem Esterderivat davon oder einem Anhydridderivat davon ist.

**4.** Polyester nach einem der Ansprüche 1-3, ferner umfassend eine vierte Komponente D, worin die vierte Komponente D eine Verbindung ist, die zumindest drei Funktionsgruppen umfasst, bevorzugt eine Verbindung ist, die drei bis sechs Funktionsgruppen umfasst, und bevorzugter aus einer bzw. einem oder mehreren von Folgenden ausgewählt ist: Weinsäure, Zitronensäure, Apfelsäure, Fumarsäure, Maleinsäure, Trimethylolpropan, Trimethylolethan, Pentaerythritol, Polyethertriol, Glycerol, 1,3,5-Benzoltricarbonsäure, 1,2,4-Benzoltricarbonsäure, 1,2,4-Benzoltricarbonanhydrid, 1,2,4,5-Benzoltetracarbonsäure und Pyromellitdianhydrid und bevorzugt aus einer bzw. einem oder mehreren von Folgenden ausgewählt ist: Apfelsäure, Zitronensäure, Fumarsäure, Maleinsäure und Glycerol;
bevorzugt, aufgrund des gesamten Molargewichtes der ersten Komponente A, die vierte Komponente D einen Gehalt von 0.01-1.0 Mol%, und weiter bevorzugt 0.02-0.2 Mol% hat.

**5.** Polyester nach einem der Ansprüche 1-4, ferner umfassend eine fünfte Komponente E als Kettenverlängerer, worin bevorzugt die fünfte Komponente E aus einem oder mehreren von Folgenden ausgewählt ist: einem Isocyanat, einem Isocyanurat, einem Peroxid, einem Epoxid, Oxazolin, Oxazin, Lactam, Carbodiimid und Polycarbodiimid umfassend zwei oder mehrere Funktionsgruppen, bevorzugt ein Isocyanat ist, das zwei oder mehrere Funktionsgruppen umfasst, und bevorzugter Hexamethylendisocyanat ist;
bevorzugt, aufgrund des gesamten Molargewichtes der ersten Komponente A, die fünfte Komponente E einen Gehalt von 0.01-5.0 Mol% hat.

**6.** Polyester nach einem der Ansprüche 1-5, worin der Polyester eine Viskositätszahl von 100-350 ml/g wie in einer Phenol/o-Dichlorbenzol-Lösung mit einem Gewichtsverhältnis von 1:1 in einem 25$\pm$0.05°C thermostatischen Wasserbad in Übereinstimmung mit der Vorschrift von GB/T 17931-1999 bestimmt;
bevorzugt der Polyester einen Carboxygruppegehalt von 10-70 mmol/kg, und weiter bevorzugt von 20-60 mmol/kg hat.

**7.** Verfahren zur Herstellung des Polyesters nach einem der Ansprüche 1-6, umfassend die folgenden Schritte:

Schritt S1: Mischen einer ersten Komponente A, einer zweiten Komponente B und eines Anteils eines Katalysators (wobei eine vierte Komponente D auch hinzugefügt wird, wenn erforderlich), und dann Heizen bis auf 180-260°C für Esterifizierungsreaktion für 1-4 Stunden in einem Esterifizierungsreaktor, um ein Esterifizierungsprodukt AB zu erhalten, worin ein Molgehalt der zweiten Komponente B üblicherweise 1.1-2.0 Mal dasjenige der ersten Komponente A ist, und die übermäßige zweite Komponente B zum Esterifizierungsreaktor durch eine Reinigungsvorrichtung recycliert wird, die mit dem Esterifizierungsreaktor verbunden ist;
Schritt S2: Durchführen von primärer Polykondensation am Esterifizierungsprodukt AB im Schritt S1 unter der Wirkung des verbleibenden Katalysators für 2-6 Stunden bei einer Reaktionstemperatur von 200-240°C, um ein primäres Polykondensationsprodukt zu erhalten; und
Schritt S3: Überführen des primären Polykondensationsproduktes, das im Schritt S2 erhalten wird, in einen endgültigen Polykondensationskessel für kontinuierliche Polykondensation bei einer Temperatur von 210-270°C, bis ein Reaktionsprodukt eine Viskositätszahl von 100-250 ml/g, wie in einer Phenol/o-Dichlorbenzol-Lösung mit einem Gewichtsverhältnis von 1:1 in einem 25$\pm$0.05°C thermostatischen Wasserbad in Übereinstimmung mit der Vorschrift von GB/T 17931-1999 bestimmt, erreicht, und das Reaktionsprodukt einen Carboxygruppegehalt von 10-70 mmol/kg hat;
worin bevorzugt, im Schritt S1, der Katalysator in einer Menge von 0.001-1%, und weiter bevorzugt, 0.02-0.2% eines Endgewichts des Polyesters hinzugefügt wird;
bevorzugt, im Schritt S1, der Katalysator in einer Menge von 50-80 Gew.-% eines Gesamtgewichts des Katalysators hinzugefügt wird;
bevorzugt, der Katalysator eine Zinnverbindung, eine Antimonverbindung, eine Kobaltverbindung, eine Bleiverbindung, eine Zinkverbindung, eine Aluminiumverbindung oder eine Titanverbindung ist, bevorzugt, eine Zinkverbindung, eine Aluminiumverbindung oder eine Titanverbindung ist, und noch bevorzugter, Tetrabutylorthotitanat oder Tetraisopropylorthotitanat ist;
bevorzugt, im Schritt S1, die Reinigungsvorrichtung eine Kombination einer Prozesskolonne und eines Kurzweg-Destillationsgerätes ist;
bevorzugt, im Schritt S2, die Reaktionstemperatur 210-230°C ist;
bevorzugt, im Schritt S2, ein Druck 0.1-0.5 bar, und bevorzugt, 0.2-0.4 bar am Anfang ist; und ein Druck 5-200

mbar, und bevorzugt, 10-100 mbar am Ende ist;
bevorzugt, der Schritt S3 ferner einen Schritt von Hinzufügen eines Passivierungsmittels zu einem Reaktionssystem umfasst;
bevorzugt, das Passivierungsmittel eine Phosphorverbindung ist, die Phosphorsäure, eine phosphorische Säure und Ester davon umfasst;
bevorzugt, im Schritt S3, die Temperatur der kontinuierlichen Polykondensation 230-260°C ist;
bevorzugt, im Schritt S3, ein Druck 0.2-5 mbar, und bevorzugt, 0.5-3 mbar am Anfang ist;
bevorzugt, im Schritt 3, eine Reaktionszeit 2-7 h, und bevorzugt 3-6 h ist;
bevorzugt, im Schritt S3, das Reaktionsprodukt einen Carboxygruppegehalt von 20-60 mmol/kg hat;
bevorzugt, am Ende des Schrittes S3, wenn erforderlich, ein Schritt S4 durchgeführt wird: Hinzufügen des Polyesters, der im Schritt S3 erhalten wird, zu einem Doppelschneckenextruder zusammen mit einer fünften Komponente E in einer Menge von 0.01-5.0 Mol% (aufgrund des gesamten Molgewichtes der ersten Komponente A) für Zurückhaltung für 0.5-15 Min bei einer Reaktionstemperatur von 200-270°C, um einen endgültigen Polyester zu erhalten, worin der endgültige Polyester eine Viskositätszahl von 150-350 ml/g wie in einer Phenol/o-Dichlorbenzol-Lösung mit einem Gewichtsverhältnis von 1:1 in einem 25$\pm$0.05°C thermostatischen Wasserbad in Übereinstimmung mit der Vorschrift von GB/T 17931-1999 bestimmt.

**8.** Polyesterformungszusammensetzung, umfassend die folgenden Komponenten im Gewichtsprozent:

5-95 Gew.-% des Polyesters nach einem der Ansprüche 1-6;
5-95 Gew.-% eines Zusatzstoffes und/oder anderer Polymere; und
0-70 Gew.-% eines Verstärkungsmaterials und/oder eines Füllstoffes.

**9.** Verwendung des Polyesters nach einem der Ansprüche 1-6 in der Herstellung eines kompostierbaren Produktes, worin das kompostierbare Produkt eine Faser, ein Film oder ein Behälter ist.

**10.** Verwendung des Polyesters nach einem der Ansprüche 1-6 in der Herstellung eines Strohhalms.

## Revendications

**1.** Polyester, comprenant des unités répétitives dérivées des composants suivants :

un premier composant A, sur la base d'un poids molaire total du premier composant A, comprenant :

a1) 81-100 % en moles, et de préférence, 90-100 % en moles d'acide succinique, ou d'un dérivé ester de celui-ci ou d'un dérivé anhydride de celui-ci,
et a2) 0-19 % en moles, et de préférence, 0-10 % en moles d'un acide dicarboxylique autre que l'acide succinique, ou un dérivé ester de celui-ci ou un dérivé anhydride de celui-ci ;

un deuxième composant B : 1,4-butanediol ; et
un troisième composant C : un dimère(1,4-butanediol) ayant une formule moléculaire de $HO-CH_2CH_2CH_2CH_2-O-CH_2CH_2CH_2CH_2-OH$, et sur la base du poids molaire total du premier composant A, dans lequel une teneur molaire en un motif répétitif $-CH_2CH_2CH_2CH_2-O-$ dans le troisième composant C est de 0.05 à 3.0 % en mole.

**2.** Polyester selon la revendication 1, dans lequel le premier composant A est l'acide totalement succinique, ou un dérivé ester de celui-ci ou un dérivé anhydride de celui-ci.

**3.** Polyester selon la revendication 1, dans lequel le composant a2) est choisi parmi un ou plusieurs parmi l'acide oxalique, l'oxalate de diméthyle, l'acide malonique, le malonate de diméthyle, l'acide méthylsuccinique, l'acide glutarique, le glutarate de diméthyle, le glutarate de bis(2-hydroxyéthyle), le glutarate de bis(3-hydroxypropyle), le glutarate de bis(4-hydroxybutyle), l'acide 2-méthylglutarique, l'acide 3-méthylglutarique, l'acide adipique, l'adipate de diméthyle, l'adipate de bis(2-hydroxyéthyle), l'adipate de bis(3-hydroxypropyle), l'adipate de bis(4-hydroxybutyle), l'acide 3-méthyladipique, l'acide 2,2,5,5-tétraméthyladipique, l'acide pimélique, l'acide subérique, l'acide azélaïque, l'azélate de diméthyle, l'acide décanedioïque, l'acide 1,11-undécanedicarboxylique, l'acide 1,10-décanedicarboxylique, l'acide undécandioïque, l'acide 1,12-dodécanedicarboxylique, l'acide hexadécanedioïque, l'acide eicosandioïque, l'acide tétracandioïque, le dimère, l'acide téréphtalique acide, téréphtalate de diméthyle, téréphtalate de

bis(2-hydroxyéthyle), téréphtalate de bis(3-hydroxypropyle), téréphtalate de bis(4-hydroxybutyle), acide isophtalique, isophtalate de diméthyle, isophtalate de bis(2-hydroxyéthyle), isophtalate de bis (3-hydroxypropyle), isophtalate de bis(4-hydroxybutyle), acide 2,6-naphtalènedicarboxylique, 2,6-benzènedicarboxylate de diméthyle, acide 2,7-naphtalènedicarboxylique, 2,7-benzènedicarboxylate de diméthyle, 3,4'-diphényléther dicarboxylique, 3,4'-diphényléther dicarboxylate de diméthyle, 4,4'-diphényléther dicarboxylique, 4,4'-diphényléther dicarboxylate de diméthyle, acide 3,4'-phénylthioéther dicarboxylique, diméthyl 3,4'-phénylthioéther dicarboxylate, acide 4,4'-diphénylthioéther dicarboxylique, diméthyl 4,4'-phénylthioéther dicarboxylate, acide 3,4'-diphénylsulfone dicarboxylique, diméthyl 3,4'-diphénylsulfone dicarboxylate, acide 4,4'-diphénylsulfone dicarboxylique, diméthyl 4,4'-diphénylsulfone dicarboxylate, acide 3,4'-benzophénone dicarboxylique, diméthyl 3,4'-benzophénone dicarboxylate, acide 4,4'-benzophénone dicarboxylique, diméthyl 4,4'-benzophénone dicarboxylate, acide 1,4-naphtalènedicarboxylique, diméthyl 1,4-naphtalène dicarboxylate, acide 4,4'-méthylènebis(benzoïque), 4,4'-méthylènebis(diméthylbenzoate), et un dérivé ester de celui-ci et un dérivé anhydride de celui-ci ;

de préférence, choisi parmi un ou plusieurs parmi l'acide adipique, l'acide décanedioïque, l'acide 1,12-dodécanedicarboxylique, l'acide téréphtalique, et un dérivé ester de ceux-ci et un dérivé anhydride de ceux-ci ;
plus préférablement, choisi parmi un ou deux parmi l'acide adipique, l'acide décanedioïque, l'acide téréphtalique et un dérivé ester de ceux-ci et un dérivé anhydride de ceux-ci ; et
le plus préférablement, étant l'acide adipique, l'acide téréphtalique, ou un dérivé ester de ceux-ci ou un dérivé anhydride de ceux-ci.

**4.** Polyester selon l'une quelconque des revendications 1 à 3, comprenant en outre un quatrième composant D, dans lequel le quatrième composant D est un composé comprenant au moins trois groupes fonctionnels, de préférence, un composé comprenant trois à six groupes fonctionnels, et plus préférablement, choisi parmi un ou plusieurs parmi l'acide tartrique, l'acide citrique, l'acide malique, l'acide fumarique, l'acide maléique, le triméthylolpropane, le triméthyloléthane, le pentaérythritol, le polyéther triol, le glycérol, l'acide 1,3,5-benzène tricarboxylique, l'acide 1,2,4-benzène tricarboxylique, l'anhydride 1,2,4-benzène tricarboxylique, l'acide 1,2,4,5-benzène tétracarboxylique et le dianhydride pyromellitique, et de préférence, choisi parmi un ou plusieurs parmi l'acide malique, l'acide citrique, l'acide fumarique, l'acide maléique et le glycérol ;
de préférence, sur la base du poids molaire total du premier composant A, le quatrième composant D a une teneur de 0.01 à 1.0 % en moles, et de préférence encore de 0.02 à 0.2 % en moles.

**5.** Polyester selon l'une quelconque des revendications 1 à 4, comprenant en outre un cinquième composant E en tant qu'allongeur de chaîne, dans lequel, de préférence, le cinquième composant E est choisi parmi un ou plusieurs parmi un isocyanate, un isocyanurate, un peroxyde, un époxyde, une oxazoline, une oxazine, un lactame, un carbodiimide et un polycarbodiimide comprenant deux ou plusieurs groupes fonctionnels, de préférence, étant un isocyanate comprenant deux ou plusieurs groupes fonctionnels, et plus préférablement, étant l'hexaméthylène diisocyanate ;
de préférence, sur la base du poids molaire total du premier composant A, le cinquième composant E a une teneur de 0.01 à 5.0 % en moles.

**6.** Polyester selon l'une quelconque des revendications 1 à 5, dans lequel le polyester a un indice de viscosité de 100 à 350 ml/g tel que déterminé dans une solution de phénol/o-dichlorobenzène ayant un rapport en poids de 1:1 dans un bain-marie thermostatique à 25$\pm$0.05 °C conformément à la disposition de GB/T 17931-1999 ;
de préférence, le polyester a une teneur en groupes carboxyle de 10 à 70 mmol/kg, et de préférence de 20 à 60 mmol/kg.

**7.** Procédé de préparation du polyester selon l'une quelconque des revendications 1-6, comprenant les étapes suivantes :

étape S1 : mélange d'un premier composant A, d'un deuxième composant B et d'une partie d'un catalyseur (un quatrième composant D étant également ajouté si nécessaire), puis chauffage à 180-260 °C pour une réaction d'estérification pendant 1-4 h dans un réacteur d'estérification pour obtenir un produit d'estérification AB, dans lequel une teneur molaire du deuxième composant B est généralement de 1.1-2.0 fois celle du premier composant A, et le deuxième composant B en excès est recyclé dans le réacteur d'estérification par un dispositif de purification connecté au réacteur d'estérification ;
étape S2: réaliser une polycondensation primaire sur le produit d'estérification AB dans l'étape S1 sous l'action du catalyseur restant pendant 2 à 6 h à une température de réaction de 200 à 240 °C, pour obtenir un produit de polycondensation primaire ; et
étape S3 : transférer le produit de polycondensation primaire obtenu à l'étape S2 dans une bouilloire de

polycondensation finale pour une polycondensation continue à une température de 210-270 °C jusqu'à ce qu'un produit de réaction atteigne un indice de viscosité de 100-250 ml/g tel que déterminé dans une solution de phénol/o-dichlorobenzène ayant un rapport pondéral de 1:1 dans un bain-marie thermostatique à 25±0.05 °C conformément à la disposition de GB/T 17931-1999, et le produit de réaction a une teneur en groupes carboxyle de 10-70 mmol/kg ;
dans lequel de préférence, dans l'étape S1, le catalyseur est ajouté en une quantité de 0.001-1 %, et de préférence encore, 0.02-0.2 % d'un poids final du polyester ;
de préférence, dans l'étape S1, le catalyseur est ajouté en une quantité de 50 à 80 % en poids d'un poids total du catalyseur ;
de préférence, le catalyseur est un composé d'étain, un composé d'antimoine, un composé de cobalt, un composé de plomb, un composé de zinc, un composé d'aluminium ou un composé de titane, de préférence, étant un composé de zinc, un composé d'aluminium ou un composé de titane, et plus préférablement, étant l'orthotitanate de tétrabutyle ou l'orthotitanate de tétraisopropyle ;
de préférence, à l'étape S1, le dispositif de purification est une combinaison d'une colonne de procédé et d'un distillateur à chemin court ;
de préférence, dans l'étape S2, la température de réaction est de 210 à 230 °C ;
de préférence, dans l'étape S2, une pression est de 0.1-0.5 bar, et de préférence, de 0.2-0.4 bar au début ; et une pression est de 5-200 mbar, et de préférence, de 10-100 mbar à la fin ;
de préférence, l'étape S3 comprend en outre une étape d'addition d'un passivateur à un système réactionnel ;
de préférence, le passivateur est un composé du phosphore comprenant de l'acide phosphorique, de l'acide phosphoreux et des esters de ceux-ci ;
de préférence, à l'étape S3, la température de la polycondensation continue est de 230 à 260 °C ;
de préférence, à l'étape S3, une pression est de 0.2 à 5 mbar, et de préférence, de 0.5 à 3 mbar au début ;
de préférence, dans l'étape 3, un temps de réaction est de 2 à 7 h, et de préférence de 3 à 6 h ;
de préférence, à l'étape S3, le produit de réaction a une teneur en groupes carboxyle de 20 à 60 mmol/kg ;
de préférence, à la fin de l'étape S3, si nécessaire, une étape S4 est effectuée : ajouter le polyester obtenu à l'étape S3 à une extrudeuse à deux vis avec un cinquième composant E en une quantité de 0.01 à 5.0 % en mole (sur la base du poids molaire total du premier composant A) pour une rétention pendant 0.5 à 15 min à une température de réaction de 200 à 270 °C pour obtenir un polyester final, dans lequel le polyester final a un indice de viscosité de 150 à 350 ml/g tel que déterminé dans une solution de phénol/o-dichlorobenzène ayant un rapport pondéral de 1:1 dans un bain d'eau thermostatique à 25±0.05 °C conformément à la disposition de GB/T 17931-1999.

**8.** Composition de moulage de polyester, comprenant les composants suivants en pourcentage en poids :

5-95 % en poids du polyester selon l'une quelconque des revendications 1-6 ;
de 5 à 95 % en poids d'un additif et/ou d'autres polymères ; et
0 à 70 % en poids d'un matériau de renforcement et/ou d'une charge.

**9.** Utilisation du polyester selon l'une quelconque des revendications 1 à 6 dans la préparation d'un produit dégradable par le compost, dans laquelle le produit dégradable par le compost est une fibre, un film ou un récipient.

**10.** Utilisation du polyester selon l'une quelconque des revendications 1 à 6 dans la préparation d'une paille.

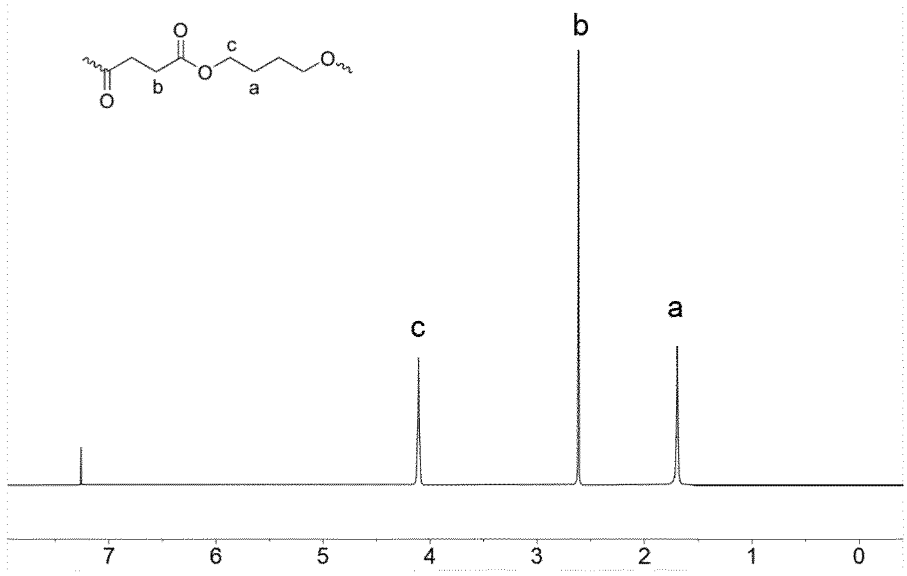


FIG. 1

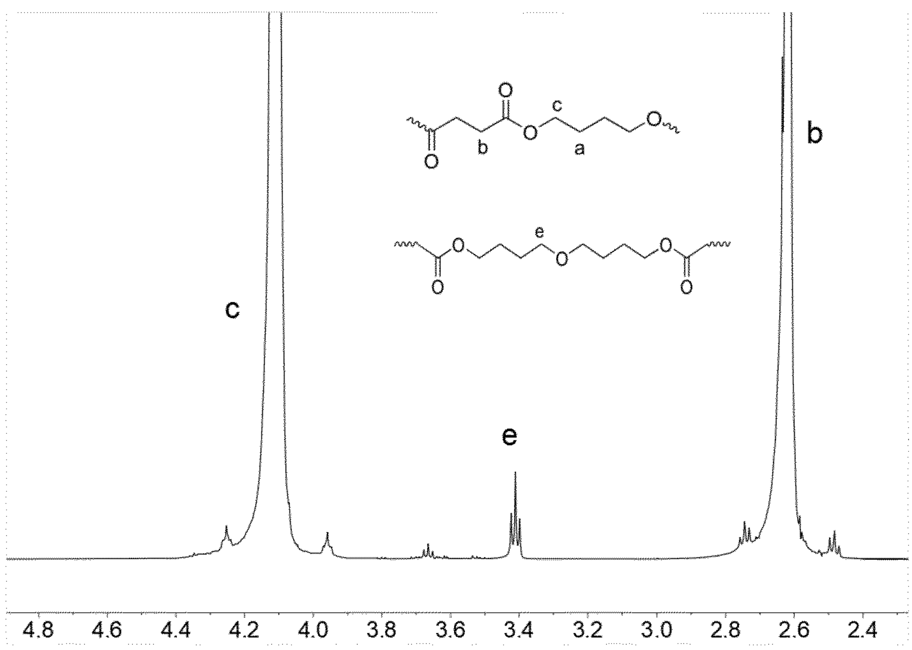


FIG. 2

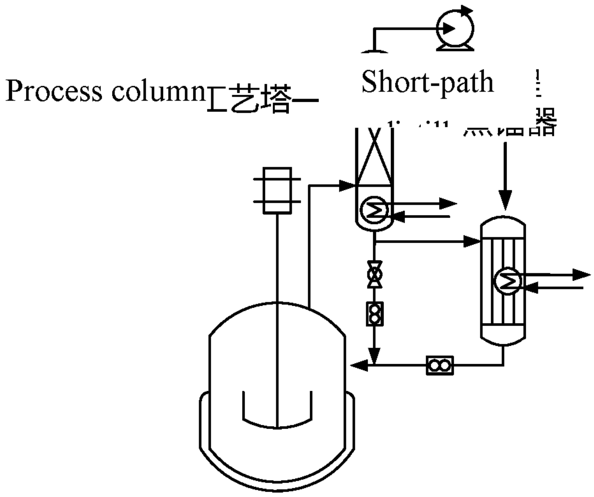
Process column工艺塔
Short-path

FIG. 3

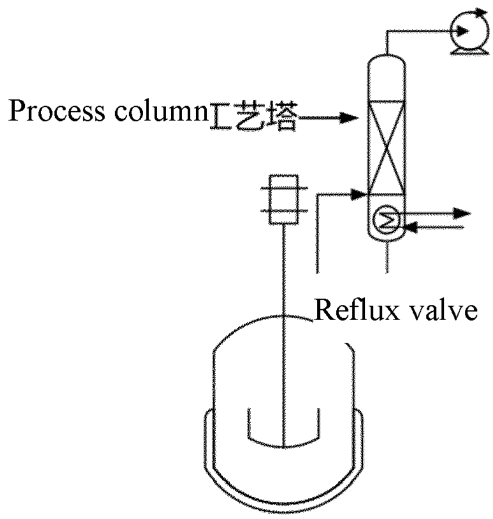
Process column工艺塔
Reflux valve

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018219708 A1
- JP 2009155556 A
- CN 212560068 U


### Non-patent literature cited in the description


- Poly(ethylene terephthalate) Polymerization - Mechanism, Catalysis, Kinetics, Mass Transfer and Reactor Design.. **RIECKMANN, T** ; **VOLKER, S.,**. Modern Polyesters: Chemistry and Technology of Polyesters and Copolyesters. John Wiley & Sons, Ltd, 2003, 63
- **PARK, Y. H** ; **CHO, C. G**. Synthesis and characterization of poly[(butylene succinate)-co-(butylene terephthalate)J-b-poly(tetramethylene glycol) segmented block copolymer. *J. Appl. Polym. Sci.*, 2001, vol. 79 (11), 2067-2075
- **MILES, W. H** ; **RUDDY, D. A.** ; **TINORGAH, S.** ; **GEISLER, R. L.** Acylative Dimerization of Tetrahydrofuran Catalyzed by Rare-Earth. *Triflates. Synth. Commun.*, 2004, vol. 34 (10), 1871-1880
- **ALEXANDER, K** ; **SCHNIEPP, L. E**. 4,4'-Dichlorodibutyl Ether and its Derivatives from Tetrahydrofuran.. *J. Am. Chem. Soc.*, 1948, vol. 70 (5), 1839-1842